# FASCICULE DE BREVET EUROPEEN

(11) **EP 3 768 949 B1**
(45) Date de publication et mention de la délivrance du brevet: **05.10.2022**
(21) Numéro de dépôt: 19718435.1
(22) Date de dépôt: 20.03.2019
(51) Int. Cl.: F01D 5/18, F01D 9/06

(54) **AUBE FIXE DE TURBINE À REFROIDISSEMENT PAR IMPACTS DE JETS D'AIR**
TURBINENLEITSCHAUFEL MIT PRALLKÜHLMERKMALEN
TURBINE VANE COMPRISING IMPINGEMENT COOLING FEATURES

(30) Priorité: 23.03.2018 FR 1852545
(43) Date de publication de la demande: 27.01.2021
(73) Titulaire: Safran Helicopter Engines, 64510 Bordes (FR)
(72) Inventeur: HALLOUIN, Baptiste, 77550 Moissy-Cramayel (FR); CASAUX-BIC, Jean-Maurice, 77550 Moissy-Cramayel (FR); MONTPELLAZ, Alexandre, 77550 Moissy-Cramayel (FR); RENAULT, Lionel, 77550 Moissy-Cramayel (FR)
(74) Mandataire: Cabinet Beau de Loménie
(86) Numéro de dépôt international: PCT/FR2019/050639
(87) Numéro de publication internationale: WO 2019/180382

(56) Documents cités:
- EP-A1- 1 503 038
- EP-A2- 1 284 338
- WO-A1-2015/095253
- FR-A1- 2 769 947
- JP-A- H04 179 802
- US-A1- 2006 222 494
- US-A1- 2016 222 806
- US-A1- 2017 234 154
- US-A1- 2018 045 055

## Description

### Arrière-plan de l'invention

La présente invention se rapporte au domaine général des aubages de turbine de turbomachine, et plus particulièrement aux aubes fixes de turbine munies de circuits de refroidissement intégrés.

De façon connue en soi, une turbomachine comporte une chambre de combustion dans laquelle de l'air et du carburant sont mélangés avant d'y être brûlés. Les gaz issus de cette combustion s'écoulent vers l'aval de la chambre de combustion et alimentent ensuite une turbine haute pression et une turbine basse pression. Chaque turbine comporte une ou plusieurs rangées d'aubes fixes (appelées distributeur) alternant avec une ou plusieurs rangées d'aubes mobiles (appelées roues mobiles), espacées de façon circonférentielle tout autour du rotor de la turbine. Ces aubes de turbine sont soumises aux températures très élevées des gaz de combustion qui atteignent des valeurs largement supérieures à celles que peuvent supporter sans dommages les aubes qui sont en contact direct avec ces gaz, ce qui a pour conséquence de limiter leur durée de vie.

Afin de résoudre ce problème, il est connu de munir ces aubes de circuits de refroidissement internes visant à réduire la température de ces dernières en créant, à l'intérieur de l'aube, une circulation organisée de cet air et, dans la paroi de l'aube, des perforations destinées à refroidir l'aube par convection forcée. Les documents FR 2 769 947 A1, US 2006/222494 A1, US 2018/045055 A1, JP H04 179802 A et EP 1 284 338 A2 illustrent exemples de ces circuits de refroidissement.

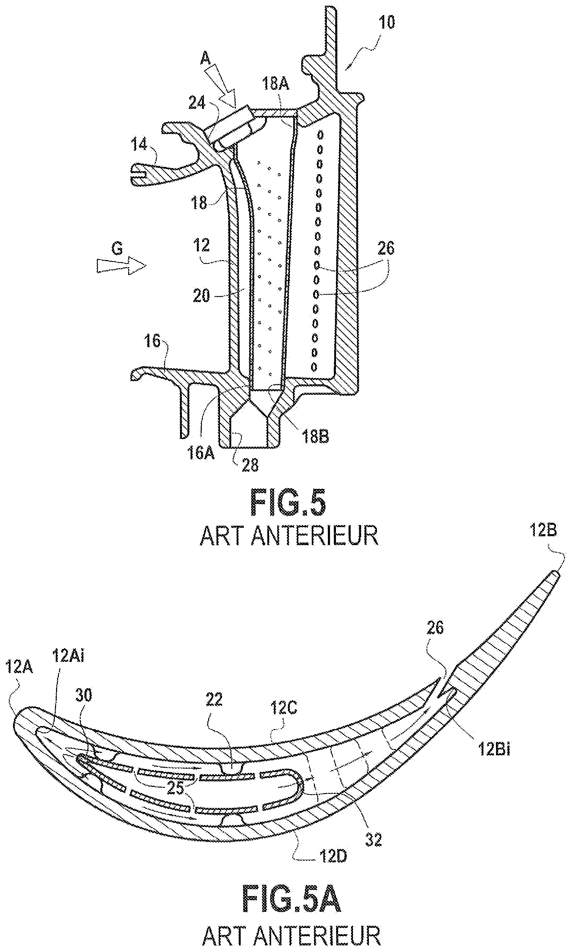

Les figures 5 et 5A illustrent une structure conventionnelle d'aube fixe refroidie du type à insert (ou chemise) débouchant équipant actuellement les distributeurs de nombreux moteurs aéronautiques.

L'aube 10 qui comporte une pale creuse 12, insérée entre une plate-forme externe 14 au niveau de la tête d'aube et une plate-forme interne 16 au niveau du pied d'aube, comporte un insert métallique 18 qui définit une cavité périphérique annulaire 20 entre la surface interne de la pale et la surface extérieure de l'insert. A sa partie supérieure 18A, cet insert métallique est fixé de façon étanche sur la plate-forme externe de l'aube par soudure ou brasure et sa partie inférieure 18B vient s'encastrer dans la plate-forme interne de l'aube au niveau d'une zone de guidage ou glissière 16A, en laissant un jeu déterminé nécessaire au montage et au coulissement de l'insert sous les effets de la dilatation thermique. Des plots 22 solidaires de la surface interne ou formés par des bossages de l'insert maintiennent un écartement constant entre l'insert et cette surface interne.

Cet insert débouchant 18 est du type multi-perforé de sorte que le débit d'air de refroidissement délivré par une source d'air sous pression, en général le compresseur de la turbomachine, pénètre dans la plate-forme externe 14 par un orifice d'entrée 24 disposé en général en tête d'aube, arrive à l'intérieur de l'insert 18 et s'échappe en partie par les multiples trous ou perforations 25 de cet insert en formant dans la cavité périphérique 20 des jets d'air qui refroidissent par impact la surface interne de la pale 12, puis sont évacués par des perçages calibrés 26 réalisés sur le bord de fuite ou préférentiellement sur la paroi intrados 12C de cette pale afin de former un film d'air protecteur le long de ce bord de fuite. Le débit d'air de refroidissement restant sort par la plate-forme interne 16 qu'il traverse en la refroidissant pour s'échapper à l'extérieur de l'aube par un orifice de sortie 28 disposé en général en pied d'aube, vers d'autres organes du moteur tels que des disques qui nécessitent aussi un refroidissement.

Cette structure conventionnelle donne globalement satisfaction car ce type de refroidissement par impacts d'air est particulièrement efficace. Toutefois, l'intégration de l'insert dans la pale creuse est couteux, peu étanche et la maîtrise de la distance entre l'insert et la surface interne de la pale est relativement délicate. Ne pas rapporter l'insert amènerait donc de nombreux avantages : diminution du coût de production, étanchéité du système de refroidissement, compacité et maîtrise de la distance entre l'insert et la pale et il a donc pu être envisagée une solution à insert intégré par fabrication additive plus compacte et plus répétable.

Cependant, les inconvénients d'un tel refroidissement à insert intégré par fabrication additive sont nombreux et notamment liés à la fabricabilité sur un distributeur monobloc dont la direction de fabrication est imposée et ne peut être que celle de l'axe moteur. En effet, tout autre choix dans la direction de fabrication conduirait à avoir une direction de fabrication par aube, ce qui est impossible à mettre en œuvre sans accroître considérablement les coûts de production. En outre, cette direction (selon l'axe moteur) implique que l'insert soit fabriqué dans le "vide" et qu'ainsi certaines surfaces dites en « downskin » soient donc susceptibles d'effondrement.

De plus, lorsque l'insert est débouchant, l'air de refroidissement d'une aube de distributeur est prélevé sur un flux d'air qui traverse l'insert et il faut alors séparer le circuit de refroidissement et le flux d'air traversant. Cela impose d'avoir des liaisons étanches entre l'insert et les parois de la pale. Or, pour que l'étanchéité du circuit de refroidissement soit parfaite, il faudrait donc l'encastrer à ses deux extrémités en l'intégrant directement à l'aube, ce qui, compte tenu du fait que la température moyenne de l'insert est très inférieure à celle de la pale (de l'ordre d'une centaine de degrés), n'est pas envisageable car l'insert serait alors mécaniquement trop sollicité. En pratique, donc seule une extrémité de l'insert pourrait être encastrée et liée à la pale par un ajustement glissant et très étroit de l'ordre de 0.01 mm qui permet d'assurer une étanchéité satisfaisante du circuit de refroidissement. Or, à ce jour, il est impossible de réaliser un tel ajustement étroit car la fabrication additive permet actuellement seulement des jeux minimum supérieurs à 0.2 mm (ce qui est 20 fois supérieur à l'ajustement recherché).

### Objet et résumé de l'invention

La présente invention vise donc à pallier les inconvénients précités en proposant une aube fixe de turbomachine refroidie par impacts qui soit : thermiquement efficace, c'est-à-dire permette de dissiper une puissance thermique élevée par utilisation d'un débit d'air modéré ; étanche, c'est à dire permette d'assurer que l'air mobilisé est uniquement dédié au refroidissement de l'aube (plus l'étanchéité du dispositif est élevée, plus son efficacité globale est grande) ; compact, c'est à dire que l'intégration du dispositif de refroidissement doit minimiser son impact sur l'encombrement du moteur ; économiquement avantageux, c'est-à-dire que le coût de production du dispositif de refroidissement doit être le moins élevé possible et enfin qui puisse être fabriqué par fabrication additive. Elle se rapporte aussi à toute turbine de turbomachine équipée de telles aubes fixes refroidies par insert débouchant.

A cet effet, il est prévu une aube fixe de turbomachine formée d'une pale creuse ayant un bord d'attaque et un bord de fuite opposés l'un de l'autre et reliés par une paroi intrados et une paroi extrados s'étendant chacune selon un axe radial de l'aube, entre un pied d'aube et une tête d'aube, l'aube comprenant un circuit de refroidissement alimenté en air et délivrant des jets d'air assurant au travers de multiples perforations dudit circuit de refroidissement un refroidissement par impact d'une surface interne de la pale, caractérisée en ce que ledit circuit de refroidissement comporte une pluralité de canaux de refroidissement superposés sur tout ou partie de la hauteur de l'aube, disposés chacun perpendiculairement audit axe radial de l'aube et intégrés à ladite surface interne de la pale dont ils épousent le contour, lesdites multiples perforations étant percées dans chacun desdits canaux de refroidissement dont des extrémités se terminant dans une cavité de purge de ladite pale sont aptes à assurer une purge de l'air ayant impacté ladite surface interne de la pale après son passage au travers desdites multiples perforations.

De la sorte, on obtient une structure de refroidissement dont la fabricabilité par fabrication additive est assurée tout en diminuant fortement les gradients thermiques par conduction au niveau de l'aube.

Avantageusement, lesdits canaux de refroidissement comportent une section triangulaire ou trapézoïdale.

De préférence, lesdits multiples orifices de chacun desdits canaux de refroidissement sont percés dans l'une au moins des parois desdits canaux de refroidissement et sont alignés en colonne les uns au-dessus des autres selon un axe radial de l'aube.

Avantageusement, lesdites extrémités desdits canaux de refroidissement se terminent dans ladite cavité de purge à proximité de trous d'émission calibrés traversant ladite paroi intrados de la pale.

De préférence, lesdits trous d'émission calibrés sont en nombre identique à celui desdits canaux de refroidissement dans le prolongement des extrémités desquelles ils sont disposés.

Avantageusement, lesdits canaux de refroidissements sont reliés par des canaux transversaux de manière à ce que l'air de refroidissement puisse librement circuler d'un canal de refroidissement à un autre formant ainsi un réseau quadrillé de canaux intégrés à ladite surface interne de la pale.

De préférence, lesdits multiples orifices sont percés au croisement des canaux de refroidissement avec les canaux transversaux ou le long des canaux transversaux.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur lesquels :
- la figure 1A est une vue en coupe au niveau d'un canal de refroidissement horizontal d'une aube fixe de distributeur de turbine dans un premier exemple de réalisation conformément à l'invention,
- la figure 1B est une vue en coupe hors canal de refroidissement d'une aube fixe de distributeur de turbine dans un premier exemple de réalisation conformément à l'invention,
- la figure 2 est une vue selon le plan II de la figure 1A,
- la figure 3 est une vue en coupe passant par les canaux de refroidissement verticaux d'une aube fixe de distributeur de turbine dans un second exemple de réalisation conformément à l'invention,
- la figure 4 est une vue selon le plan IV de la figure 3, et
- les figures 5 et 5A sont une vue en perspective et en coupe d'une aube fixe de distributeur de turbine de l'art antérieur.

### Description détaillée de l'invention

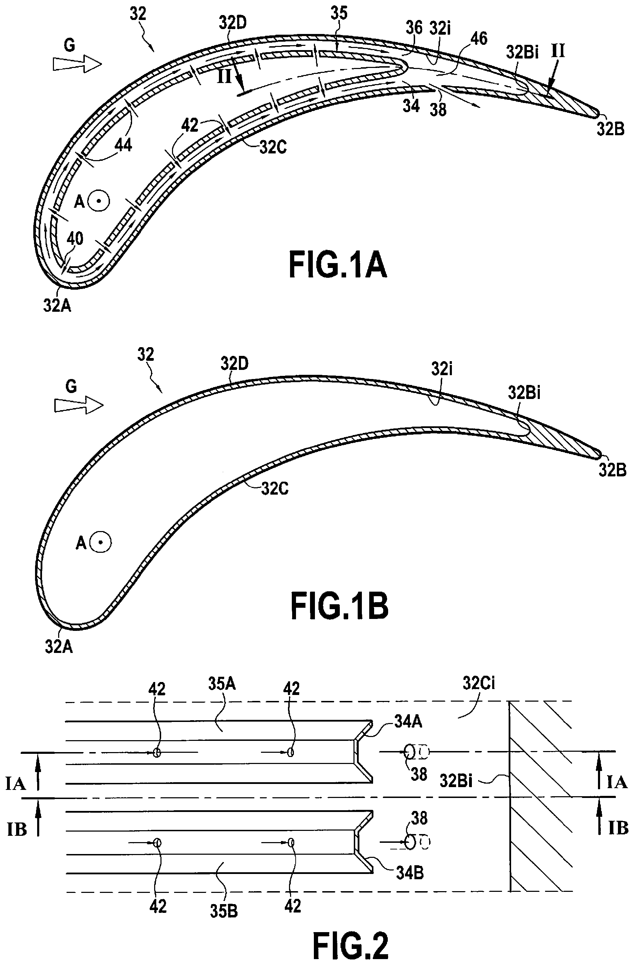

Les figures 1A et 1B représentent en coupe axiale un aubage refroidi, par exemple une aube fixe de distributeur de turbine d'une turbomachine conforme à la présente invention. Cette aube formée d'une pale creuse 32 est fixée sur un carter (non représenté) de la turbine dans la veine d'écoulement des gaz de combustion au travers de la turbine dont le sens d'écoulement de ces gaz est illustré par la flèche référencée G sur la figure. On définit pour cette pale 32 un bord d'attaque 32A et un bord de fuite 32B opposés l'un de l'autre et des parois intrados 32C et extrados 32D s'étendant radialement entre un pied d'aube et une tête d'aube.

Une telle aube fixe est soumise aux températures très élevées des gaz de combustion et nécessite donc d'être refroidie. A cet effet, un circuit de refroidissement alimenté en air de refroidissement à l'une de ses extrémités radiales (le flux d'air de refroidissement qui sur la figure va selon un axe radial de l'aube, de la tête d'aube au pied d'aube, est représenté par la flèche référencée A), est formé par une pluralité de canaux 35 préférentiellement indépendants les uns des autres, adjacents ou non, superposés sur tout ou partie de la hauteur de l'aube et intégrés à la surface interne de la pale 32i (c'est-à-dire solidaire de cette dernière) dont ils épousent le contour, à l'exception d'un voisinage du bord de fuite. L'encombrement dans la zone du bord de fuite ne permettant pas en effet d'y intégrer ces canaux, ce bord de fuite est donc refroidi par la purge des impacts, représentée par les flêches 34 et 36, au travers desquelles l'air de refroidissement réchauffé par le contact avec la paroi de l'aube est expulsé (on dit aussi purgé) avant d'être évacué par des trous d'émission calibrés ou évents 38 réalisés à proximité dans la paroi intrados 32C de cette pale, afin de former un film d'air protecteur le long du bord de fuite 32B. Cet air de refroidissement issu des jets d'air ayant impactés la surface interne de la pale 32i avait été préalablement introduit dans ces canaux 35 par plusieurs orifices percés au travers de leur paroi, dont au moins un 40 dans le prolongement du bord d'attaque 32A, un ou plusieurs 42 en regard de la paroi intrados 32C et un ou plusieurs 44 en regard de la paroi extrados 32D. Ces différents orifices sont alignés avantageusement en colonne les uns au-dessus des autres sur tout ou partie de la hauteur de l'aube selon l'axe radial de l'aube.

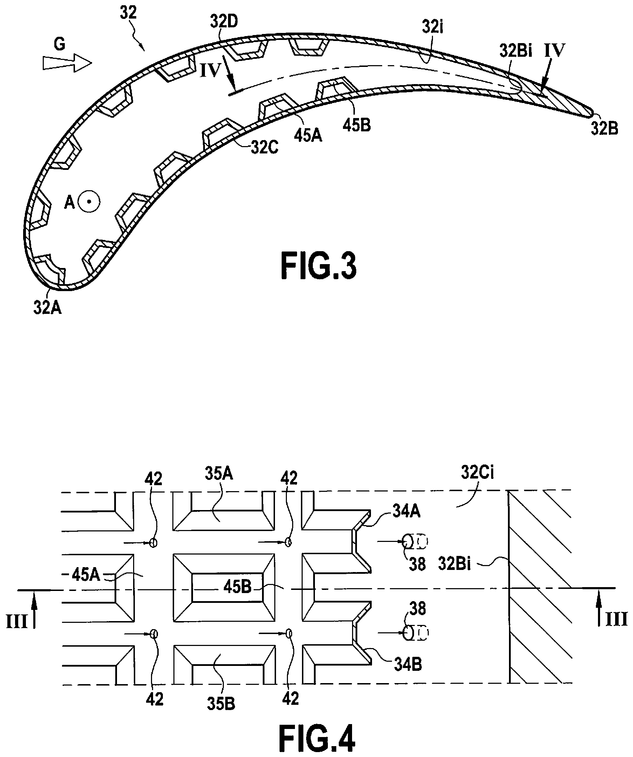

Les figures 2 et 4 sont des vues en élévation d'une partie de la surface interne intrados 32Ci de l'aube jusqu'à son bord de fuite selon deux modes de réalisation du circuit de refroidissement différents.

Sur la figure 2 sont représentés par exemple deux canaux de refroidissement 35A, 35B superposés mais non adjacents l'un à l'autre et qui dans cet exemple présentent une section trapézoïdale. La surface interne de la pale forme la grande base de la section trapézoïdale à l'opposé de laquelle la petite base de cette section trapézoïdale constituant une paroi du canal de refroidissement est percée des orifices 42 pour le passage des jets d'air assurant le refroidissement par impact de la surface interne de la pale 32i en regard. Une fois ces impacts réalisés, l'air réchauffé est naturellement purgé au travers des extrémités 34, 36 du canal (selon que l'impact est effectué sur la surface interne intrados ou extrados, la purge est réalisée par l'une ou l'autre des extrémités, la purge de l'impact sur la surface interne du bord d'attaque se répartissant toutefois à la fois sur ces deux extrémités) puis évacué par les trous d'émission calibrés 38 traversant la paroi intrados 32C de la pale et qui sont de préférence, comme illustré et sans que cela soit une obligation, en nombre identique à celui des canaux dans le prolongement des extrémités desquelles ils sont disposés.

Cette solution de refroidissement est parfaitement étanche car les canaux débouchent chacun dans une cavité de purge 46 indépendante de la cavité principale dans laquelle circule le flux A. On notera que les canaux 35 peuvent également être directement connectés aux évents 38. Dans ce cas, le nombre d'évents est identique au nombre de canaux. De plus, comme on lie intimement le circuit de refroidissement à l'aube, on réduit les gradients thermiques par conduction susceptibles de fissurer un insert qui serait lié à ses deux extrémités comme ceux de l'art antérieur.

On notera que si les canaux de refroidissement 35 ont été illustrés avec une section trapézoïdale, il est évident pour l'homme de l'art qu'une section triangulaire ou toute autre section pouvant être obtenue aisément par fabrication additive, par exemple en forme d'arche, est bien entendu envisageable. De même, si les orifices 42 ont été représentés sur la paroi du canal formant la petite base de la section trapézoïdale, il est évident que ces orifices peuvent aussi être percés sur les parois inclinées de cette section trapézoïdale.

Sur les figures 3 et 4, qui présentent un second mode de réalisation du circuit de refroidissement, les canaux de refroidissement 35A, 35B assurant la purge de l'air impacté sont reliés par des canaux transversaux 45A, 45B, assurant la récupération des impacts de jets d'air, de manière à ce que l'air de refroidissement puisse librement circuler d'un canal de refroidissement à un autre formant ainsi un réseau quadrillé de canaux intégrés à la surface interne de la pale 23i. Si, par souci de simplification du dessin, les orifices 42 pour le passage des jets d'air ont été représentés au croisement des canaux, ce positionnement n'est pas obligatoire et un positionnement différent le long des canaux transversaux est aussi envisageable. Plus précisément, il est d'ailleurs préférable que les jets d'air ne soient pas situés aux croisements pour limiter le cisaillement des impacts par la purge des impacts situés en amont.

Ainsi, avec cette configuration, il devient possible de faire du refroidissement par impacts de jets d'air sans avoir recours à un insert, ce qui est particulièrement intéressant pour au moins deux raisons : le circuit mobilise des coefficients d'échange convectif très élevés (dans la zone des impacts), ce qui rend le refroidissement très efficace, et il peut être utilisé dans des architectures où les gradients de pression de l'air de refroidissement sont faibles au contraire des solutions de refroidissement en treillis (lattices) qui, constituant un milieu peu perméable, favorisent les échanges convectifs car ces structures ont un rapport surface d'échange sur volume très élevé.

Bien entendu, si la description a été faite essentiellement en regard d'une aube fixe de turbine de turbomachine, il est évident qu'une telle structure d'aube refroidie par canaux de refroidissement intégrés peut s'appliquer sans difficulté à un stator de compresseur de turbomachine comme à un bras de carter de turbomachine.

## Revendications

1. Aube de turbomachine formée d'une pale creuse (32) ayant un bord d'attaque (32A) et un bord de fuite (32B) opposés l'un de l'autre et reliés par une paroi intrados (32C) et une paroi extrados (32D) s'étendant chacune selon un axe radial de l'aube, entre un pied d'aube et une tête d'aube, l'aube comprenant un circuit de refroidissement alimenté en air et délivrant des jets d'air assurant au travers de multiples orifices (40, 42, 44) dudit circuit de refroidissement un refroidissement par impact de la surface interne (32i) de la pale, **caractérisée en ce que** ledit circuit de refroidissement comporte une pluralité de canaux de refroidissement (35 ; 35A, 35B) superposés sur tout ou partie de la hauteur de l'aube, disposés chacun perpendiculairement audit axe radial de l'aube et intégrés à ladite surface interne de la pale dont ils épousent le contour, lesdits multiples orifices étant percés dans chacun desdits canaux de refroidissement dont des extrémités (34 ; 34A, 34B ; 36) se terminant dans une cavité de purge (46) de ladite pale sont aptes à assurer une purge de l'air ayant impacté ladite surface interne de la pale après son passage au travers desdits multiples orifices.

2. Aube selon la revendication 1, **caractérisée en ce que** lesdits canaux de refroidissement comportent une section triangulaire ou trapézoïdale.

3. Aube selon la revendication 1 ou la revendication 2, **caractérisée en ce que** lesdits multiples orifices de chacun desdits canaux de refroidissement sont percés dans l'une au moins des parois desdits canaux de refroidissement.

4. Aube selon l'une quelconque des revendications 1 à 3, **caractérisée en ce que** lesdits multiples orifices sont alignés en colonne les uns au-dessus des autres selon un axe radial de l'aube.

5. Aube selon l'une quelconque des revendications 1 à 4, **caractérisée en ce que** lesdites extrémités desdits canaux de refroidissement se terminent dans ladite cavité de purge à proximité de trous d'émission calibrés (38) traversant ladite paroi intrados de la pale.

6. Aube selon la revendication 5, **caractérisée en ce que** lesdits trous d'émission calibrés sont en nombre identique à celui desdits canaux de refroidissement dans le prolongement des extrémités desquelles ils sont disposés.

7. Aube selon l'une quelconque des revendications 1 à 6, **caractérisée en ce que** lesdits canaux de refroidissements sont reliés par des canaux transversaux (45A, 45B) de manière à ce que l'air de refroidissement puisse librement circuler d'un canal de refroidissement à un autre formant ainsi un réseau quadrillé de canaux intégrés à ladite surface interne de la pale.

8. Aube selon la revendication 7, **caractérisée en ce que** lesdits multiples orifices sont percés au croisement des canaux de refroidissement avec les canaux transversaux ou le long des canaux transversaux.

9. Aube selon l'une quelconque des revendications 1 à 8 obtenue par fabrication additive.

10. Turbine de turbomachine, **caractérisée en ce qu'**elle comporte une pluralité d'aubes selon l'une quelconque des revendications 1 à 9.

## Patentansprüche

1. Turbinenleitschaufel, die aus einem hohlen Schaufelblatt (32) gebildet ist, das eine Vorderkante (32A) und eine Hinterkante (32B) aufweist, die einander entgegengesetzt sind und durch eine druckseitige Wand (32C) und eine saugseitige Wand (32D) verbunden sind, die sich jeweils entlang einer radialen Achse der Schaufel zwischen einem Schaufelfuß und einem Schaufelkopf erstrecken, wobei die Schaufel einen Kühlkreislauf umfasst, der mit Luft versorgt wird und Luftstrahlen abgibt, die durch mehrere Öffnungen (40, 42, 44) des Kühlkreislaufs eine Prallkühlung der inneren Oberfläche (32i) des Schaufelblatts gewährleisten, **dadurch gekennzeichnet, dass** der Kühlkreislauf eine Vielzahl von Kühlkanälen (35; 35A, 35B) umfasst, die über die gesamte Höhe der Schaufel oder einem Teil davon übereinander liegen, jeweils senkrecht zur radialen Achse der Schaufel angeordnet sind und in die innere Oberfläche des Schaufelblatts integriert sind, an dessen Kontur sie sich anschmiegen, wobei die mehreren Öffnungen, die in jeden der Kühlkanäle gebohrt sind, deren Enden (34; 34A, 34B; 36) in einem Entlüftungshohlraum (46) des Schaufelblatts enden, geeignet sind, eine Entlüftung der Luft, die auf die innere Oberfläche des Schaufelblatts geprallt ist, nach ihrem Durchqueren der mehreren Öffnungen zu gewährleisten.

2. Schaufel nach Anspruch 1, **dadurch gekennzeichnet, dass** die Kühlkanäle einen dreieckigen oder trapezförmigen Querschnitt umfassen.

3. Schaufel nach Anspruch 1 oder Anspruch 2, **dadurch gekennzeichnet, dass** die mehreren Öffnungen von jedem der Kühlkanäle in mindestens eine der Wände der Kühlkanäle gebohrt sind.

4. Schaufel nach einem der Ansprüche 1 bis 3, **dadurch gekennzeichnet, dass** die mehreren Öffnungen in einer Säule übereinander entlang einer radialen Achse der Schaufel ausgerichtet sind.

5. Schaufel nach einem der Ansprüche 1 bis 4, **dadurch gekennzeichnet, dass** die Enden der Kühlkanäle in dem Entlüftungshohlraum in der Nähe von kalibrierten Ausströmlöchern (38) enden, welche die druckseitige Wand der Schaufel durchqueren.

6. Schaufel nach Anspruch 5, **dadurch gekennzeichnet, dass** die kalibrierten Ausströmlöcher in einer Anzahl vorhanden sind, die identisch mit derjenigen der Kühlkanäle in der Verlängerung der Enden ist, an denen sie angeordnet sind.

7. Schaufel nach einem der Ansprüche 1 bis 6, **dadurch gekennzeichnet, dass** die Kühlkanäle derart durch Querkanäle (45A, 45B) verbunden sind, dass die Kühlluft frei von einem Kühlkanal zum anderen umlaufen kann, wodurch somit ein schachbrettartiges Netz von in die innere Oberfläche des Schaufelblatts integrierten Kanälen gebildet wird.

8. Schaufel nach Anspruch 7, **dadurch gekennzeichnet, dass** die mehreren Öffnungen an der Kreuzung der Kühlkanäle mit den Querkanälen oder entlang der Querkanäle gebohrt sind.

9. Schaufel nach einem der Ansprüche 1 bis 8, die durch additive Fertigung erhalten wird.

10. Turbomaschinenturbine, **dadurch gekennzeichnet, dass** sie eine Vielzahl von Schaufeln nach einem der Ansprüche 1 bis 9 umfasst.

## Claims

1. Turbomachine blade formed of a hollow airfoil (32) having a leading edge (32A) and a trailing edge (32B) opposite to each other and connected by an intrados wall (32C) and an extrados wall (32D) each extending along a radial axis of the blade, between a blade root and a blade tip, the blade comprising a cooling circuit supplied with air and delivering air jets ensuring through multiple orifices (40, 42, 44) of said cooling circuit, an impingement cooling of the inner surface (32i) of the airfoil, **characterized in that** said cooling circuit includes a plurality of superimposed cooling channels (35; 35A, 35B) over all or part of the height of the blade, each disposed perpendicularly to said radial axis of the blade and integrated into said inner surface of the airfoil while matching its contour, said multiple orifices being drilled in each of said cooling channels whose ends (34; 34A, 34B; 36) terminating in a purge cavity (46) of said airfoil are able to ensure a purge of the air having impinged said inner surface of the airfoil after its passage through said multiple orifices.

2. Blade according to claim 1, **characterized in that** said cooling channels include a triangular or trapezoidal section.

3. Blade according to claim 1 or claim 2, **characterized in that** said multiple orifices of each of said cooling channels are drilled in one at least of the walls of said cooling channels.

4. Blade according to any one of claims 1 to 3, **characterized in that** said multiple orifices are aligned in column above each other along a radial axis of the blade.

5. Blade according to any one of claims 1 to 4, **characterized in that** said ends of said cooling channels terminate in said purge cavity in the vicinity of calibrated emission holes (38) passing through said intrados wall of the airfoil.

6. Blade according to claim 5, **characterized in that** said calibrated emission holes have the same number as that of said cooling channels in the extension of the ends of which they are disposed.

7. Blade according to any one of claims 1 to 6, **characterized in that** said cooling channels are connected by transverse channels (45A, 45B) such that the cooling air can freely circulate from one cooling channel to another thus forming a grid network of channels integrated into said inner surface of the airfoil.

8. Blade according to claim 7, **characterized in that** said multiple orifices are drilled at the intersection of the cooling channels with the transverse channels or along the transverse channels.

9. Blade according to any one of claims 1 to 8 obtained by additive manufacturing.

10. Turbomachine turbine, **characterized in that** it includes a plurality of blades according to any one of claims 1 to 9.
